# EUROPÄISCHE PATENTSCHRIFT

(11) **EP 0 674 110 B1**
(45) Veröffentlichungstag und Bekanntmachung des Hinweises auf die Patenterteilung: **19.11.1997**
(21) Anmeldenummer: 95102500.6
(22) Anmeldetag: 22.02.1995
(51) Int. Cl.: F16B 43/00, F16B 39/24

(54) **Federnde Scheibe zum Sichern von Schrauben, Muttern oder dergleichen**
Spring washer for locking screws, nuts or the like
Rondelle élastique pour verrouiller de vis, d'écrous ou analogues

(30) Priorität: 25.02.1994 DE 4406270
(43) Veröffentlichungstag der Anmeldung: 27.09.1995
(73) Patentinhaber: TECKENTRUP GMBH & CO. KG, D-58849 Herscheid (DE)
(72) Erfinder: Overhues, Egon, D-58809 Neuenrade (DE)
(74) Vertreter: Kohlmann, Karl Friedrich, Dipl.-Ing.

(56) Entgegenhaltungen:
- EP-A- 0 470 433
- BE-A- 1 001 224
- DE-A- 3 011 488
- US-A- 3 037 221
- US-A- 3 476 009

## Beschreibung

Die Erfindung betrifft eine federnde Scheibe zum Sichern von Schrauben, Muttern oder dergleichen, mit einem im wesentlichen ringförmigen Scheibenkörper bestimmter Stärke, der eine Scheibenoberseite und eine Scheibenunterseite aufweist, wobei die Scheibenunterseite in eine Außenringfläche und eine Innenringfläche unterteilt ist, und die Scheibe im unverspannten Zustand mit der Außenkante der Außenringfläche auf einer senkrech zur Achse der Scheibe befindlichen ebenen Unterlage aufruht und die Außenringfläche und die Innenringfläche mit dieser ebenen Unterlage einen spitzen Winkel einschließen.

Federnde Scheiben haben die Aufgabe, Lockerungsvorgängen bei Schraubverbindungen entgegenzuwirken. Derartige Lockerungsvorgänge resultieren aus Vorspannkraftverlusten in den Schraubverbindungen, welche als Folge von Setz- und/oder Kriechvorgängen bei den miteinander verschraubten Teilen auftreten.

Um Lockerungsvorgänge zu vermeiden, müssen die federnden Scheiben über einen bestimmten Federweg eine ausreichende Federkraft aufweisen, die einen durch die Setz- und/oder Kriechvorgänge hervorgerufenen Vorspannkraftverlust soweit ausgleichen kann, daß die für die Betriebssicherheit der Schraubenverbindung erforderliche Klemmkraft erhalten bleibt.

Zur Erzielung einer ausreichenden Federkraft über einen bestimmten Federweg sind bereits verschiedenste Scheibenkonstruktionen vorgeschlagen worden. Die einfachste Scheibenkonstruktion dieser Art stellt die Spannscheibe nach DIN 6796 dar. Bei dieser bekannten Konstruktion geht die Außenringfläche bei gleicher Stärke des Scheibenkörpers unmittelbar ohne erkennbare Unterteilung in die Innenringfläche über. Eine weitere Konstruktion der gattungsgemäßen Art offenbart beispielsweise die DE-B 20 61 297. Bei dieser Konstruktion ist die Scheibenunterseite durch eine Stufe in die Außenringfläche und die Innenringfläche unterteilt. Beim Anziehen der Schraubverbindung wird deshalb zuerst die Außenringfläche auf die Unterlage gepreßt, woraus eine Anfangsfederkraft mit bestimmtem Federweg resultiert. Beim weiteren Anziehen folgt dann die Krafteinleitung über die relativ steife Stufe, wodurch sich eine relativ hohe Federkraft bei sehr geringem Federweg ergibt. Aufgrund der Hebelwirkung der Stufe besteht jedoch die Gefahr, daß sich bei einem weiteren Anziehvorgang die Außenkante der Außenringfläche von der Unterlage abhebt, so daß schließlich die gesamte Belastung lediglich im Stufenbereich liegt. Dieser Bereich ist deshalb auch am meisten belastet. Scheibenkonstruktionen dieser Art eignen sich deshalb lediglich für solche Sicherungsaufgaben, die im Bereich der Auflage unter der Stufe relativ hohen spezifischen Flächenpressungen ausgesetzt werden dürfen.

Eine weitere Scheibenkonstruktion offenbart die DE-A 40 25 146. Bei dieser bekannten Konstruktion geht die Außenringfläche stetig, d.h. ohne Stufe oder dergleichen in die Innenringfläche über. Der Übergangsbereich hat bei dieser Scheibenkonstruktion jedoch einen geringeren Querschnitt als der übrige Bereich des Scheibenkörpers. Dieser geringere Querschnitt im Übergangsbereich wird durch eine auf der Scheibenoberseite angeordnete umlaufende Rinne erzielt. Aufgrund dieser umlaufenden Rinne auf der Scheibenoberseite haben Scheibenkonstruktionen dieser Art insbesondere bei geringer Stärke des Scheibenkörpers und zu hoher Anzugskraft die Tendenz zu "klaffen", d.h. die Neigung im Bereich der Außenkante der Außenringfläche abzuheben.

Das sogenannte "Klaffen" kann bei derartigen Scheibenkonstruktionen in seinen Auswirkungen dadurch reduziert werden, daß der die Außenringfläche aufweisende Teil des Scheibenkörpers relativ großflächig ausgebildet wird. Dies bedeutet, daß Scheibenkonstruktionen dieser Art ihre volle Sicherungswirkung insbesondere bei großem Außendurchmesser erzeugen.

Aufgabe der vorliegenden Erfindung ist es, eine federnde Scheibe der gattungsgemäßen Art derart weiterzubilden, daß sie in einfacher Weise kostengünstig mit geringem Materialeinsatz herstellbar ist und bei gleichmäßigen Reibwerten gute Feder- und Losdreheigenschaften aufweist.

Diese Aufgabe wird erfindungsgemäß dadurch gelöst, daß die Scheibenunterseite durch eine umlaufende Rinne in die Außenringfläche und die Innenringfläche unterteilt ist, und die Außenringfläche nach innen gewölbt ist.

Durch die erfindungsgemäße Merkmalskombination ist eine federnde Scheibe geschaffen, die sich in überraschender Weise mit reproduzierbaren Eigenschaften in großer Stückzahl herstellen läßt, einen relativ großen Federweg besitzt und vergleichsweise hohe Federkräfte erzeugt. Im verspannten Zustand weist die Scheibe darüber hinaus noch eine hohe Restfederung auf, woraus sich gute Sicherungseigenschaften ergeben. Durch die spezielle Formgebung kann darüber hinaus der Außendurchmesser relativ klein gehalten werden.

Gegenüber einfachen Spannscheiben nach DIN 6796 ergeben sich im Vergleich folgende Vorteile:
- Bei gleicher Federkraft kann der Materialeinsatz um 40 bis 50 % gesenkt werden,
- legt man gleichen Materialeinsatz zugrunde, kann aufgrund der erfindungsgemäßen Merkmalskombination eine höhere Federkraft erzielt werden,
- bei gleichem Materialeinsatz und erheblich höherer Federkraft ergibt sich bei geringerer Setzung eine wesentliche Erhöhung des aktiven Federweges bei gleichzeitiger Verbesserung der Wiederverwendbarkeit.

Zur Erzielung der geschilderten Eigenschaften reicht es aus, wenn die Innenringfläche eben ausgebildet ist. Für bestimmte Anwendungsbereiche kann es jedoch auch vorteilhaft sein, die Innenringfläche nach innen gewölbt, d.h. konkav auszubilden.

Wie bereits erwähnt, besteht ein wesentliches Merkmal der erfindungsgemäßen Merkmalskombination darin, daß die Außenringfläche mit der ebenen Unterlage einen kleineren spitzen Winkel einschließt als die Innenringfläche. Je nach Material, Größe der Scheibe und Einsatzzweck können die spitzen Winkel unterschiedlich gewählt werden. Vorteilhaft ist es jedoch, wenn der spitze Winkel zwischen der Außenringfläche und der ebenen Unterlage im unverspannten Zustand zwischen 3° und 20°, vorzugsweise zwischen 5° und 15° beträgt und der spitze Winkel zwischen der Innenringfläche und der ebenen Unterlage im unverspannten Zustand zwischen 10° und 20°, vorzugsweise zwischen 12° und 15° beträgt.

Für spezielle Anwendungszwecke kann es vorteilhaft sein, den spitzen Winkel zwischen der Innenringfläche und der ebenen Unterlage im unverspannten Zustand etwa doppelt so groß zu wählen, wie den spitzen Winkel zwischen der Außenringfläche und der ebenen Unterlage.

Wie ebenfalls bereits erwähnt, besteht ein weiteres wesentliches Merkmal der erfindungsgemäßen Merkmalskombination darin, daß die Rinne im Gegensatz zu bekannten Lösungen auf der Scheibenunterseite angeordnet ist. Grundsätzlich kann die Rinne jede beliebige Form aufweisen. Eine für die Fertigung und die Funktion besonders vorteilhafte Form der Rinne stellt ein kreisabschnittförmiger bzw. halbkreisförmiger Querschnitt dar.

Das Verhältnis der Außenringfläche zur Innenringfläche kann grundsätzlich frei gewählt und durch Versuche dem jeweiligen Anwendungszweck angepaßt werden. Optimale Verhältnisse für einen Großteil der Anwendungsbereiche sind jedoch dann gegeben, wenn sich das Verhältnis der Außenringfläche zur Innenringfläche wie etwa 3 : 1 verhält.

Zur Erzielung der geschilderten Eigenschaften reicht es aus, wenn die Rinne in der Scheibenunterseite angeordnet ist. Für spezielle Anwendungszwecke kann es jedoch auch vorteilhaft sein, zusätzlich auf der Scheibenoberseite eine derartige Rinne anzuordnen. Diese Rinne auf der Scheibenoberseite kann ebenfalls einen kreisabschnitts- bzw. halbkreisförmigen Querschnitt besitzen.

Falls es sich bei dem Anwendungsgebiet um ein solches handelt, bei dem sich die Außenringfläche in die Unterlage eingraben soll oder darf, ist es vorteilhaft, die Außenkante der Außenringfläche scharfkantig auszubilden.

Zur Verbesserung der Sicherungswirkung kann es bei bestimmten Anwendungen auch vorteilhaft sein, die Scheibenoberseite mit einer Profilierung auszustatten. Diese Profilierung kann sich auf den Innenringbereich beschränken und beispielsweise in Form einer Riffelung ausgestaltet sein. Diese Profilierung kann auch als Rändel- oder Kreuzrändelprofilierung oder in anderer Weise ausgebildet sein.

Zur Erzielung der geschilderten Eigenschaften reicht es grundsätzlich aus, wenn die Scheibenoberseite eben ausgebildet ist. Im Bedarfsfalle kann die Scheibenoberseite jedoch auch mit einer Wölbung ausgestattet werden. Besonders gute Ergebnisse werden mit einer konkaven Wölbung erzielt.

Eine besonders vorteilhafte Herstellung wird dann ermöglicht, wenn nicht nur die Außenringfläche nach innen gewölbt, sondern zur Erzielung dieser Wölbung der gesamte Scheibenkörper im Außenringbereich bombiert wird.

Für Scheibenkonstruktionen, bei denen auch die Innenringfläche nach innen gewölbt ausgebildet ist, kann es zur Herstellungsvereinfachung vorteilhaft sein, den gesamten Scheibenkörper auch im Innenringbereich bombiert auszubilden.

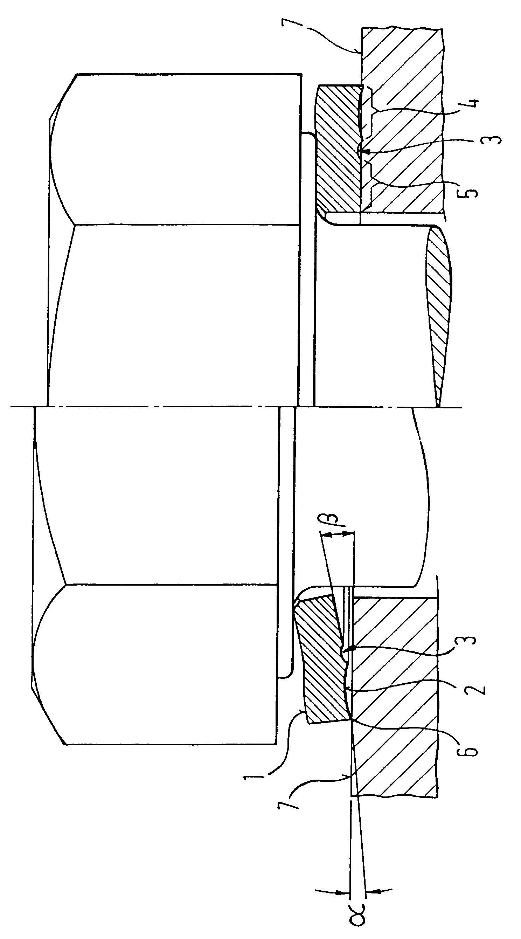

Im folgenden ist zur weiteren Erläuterung und zum besseren Verständnis ein Ausführungsbeispiel der Erfindung unter Bezugnahme auf die beigefügte Zeichnung näher beschrieben und erläutert:

Die Figur zeigt eine federnde Scheibe am Beispiel einer Schraubensicherung, wobei die linke Seite der Figur die federnde Scheibe im unverspannten Zustand und die rechte Seite die federnde Scheibe in verspanntem Zustand zeigt.

Wie aus der Figur hervorgeht, besteht die federnde Scheibe aus einem im wesentlichen ringförmigen Scheibenkörper, der eine Scheibenoberseite 1 und eine Scheibenunterseite 2 aufweist. Die Scheibenunterseite 2 ist dabei durch eine umlaufende Rinne 3 in eine Außenringfläche 4 und eine Innenringfläche 5 unterteilt.

Wie aus der linken Seite der Fig. hervorgeht, ist die federnde Scheibe derart gestaltet, daß sie im unverspannten Zustand mit einer Außenkante 6 ihrer Außenringfläche 4 auf einer ebenen Unterlage 7 aufruht. Die Anordnung ist dabei derart getroffen, daß die Außenringfläche 4 mit der ebenen Unterlage 7 im unverspannten Zustand einen Winkel α und die Innenringfläche 5 mit der ebenen Unterlage 7 einen Winkel β einschließt. Die Winkel sind dabei erfindungsgemäß derart gewählt, daß sowohl der Winkel α als auch der Winkel β spitze Winkel sind und der Winkel α stets einen kleineren Wert aufweist als der Winkel β. Beim vorliegenden Ausführungsbeispiel beträgt der Winkel α 5° und der Winkel β 12,5°.

Ein weiteres wesentliches Merkmal des dargestellten Ausführungsbeispieles besteht darin, daß die Außenringfläche 4 nach innen gewölbt ist, wodurch sich ringförmige Schneidkanten ergeben, die sich in die Fläche der Unterlage 7 eingraben, wie dies aus der rechten Seite der Figur erkennbar ist.

Bei dem dargestellten Ausführungsbeispiel ist die Innenringfläche 5 eben ausgebildet und der gesamte Scheibenkörper im Außenringbereich bombiert.

## Patentansprüche

1. Federnde Scheibe zum Sichern von Schrauben, Muttern oder dergleichen, mit einem im wesentlichen ringförmigen Scheibenkörper bestimmter Stärke, der eine Scheibenoberseite und eine Scheibenunterseite aufweist, wobei die Scheibenunterseite in eine Außenringfläche und eine Innenringfläche unterteilt ist wobei die Außenringfläche (4) mit einer senkrecht zur Achse der Scheibe befindlichen ebenen Unterlage (7) einen kleineren spitzen Winkel (α) einschließt als die Innenringfläche (5), und die Scheibe im unverspannten Zustand mit der Außenkante der Außenringfläche auf der ebenen Unterlage aufruht und die Außenringfläche und die Innenringfläche mit dieser ebenen Unterlage einen spitzen Winkel einschließen,
**dadurch gekennzeichnet**, **daß**
die Scheibenunterseite (2) durch eine umlaufende Rinne (3) in die Außenringfläche (4) und die Innenringfläche (5) unterteilt ist, und die Außenringfläche (4) nach innen gewölbt ist.

2. Scheibe nach Anspruch 1,
**dadurch gekennzeichnet**, **daß**
die Innenringfläche (5) eben ausgebildet ist.

3. Scheibe nach Anspruch 1,
**dadurch gekennzeichnet**, **daß**
die Innenringfläche (5) nach innen gewölbt ausgebildet ist.

4. Scheibe nach Anspruch 1 oder 2,
**dadurch gekennzeichnet**, **daß**
der spitze Winkel (α) zwischen der Außenringfläche (4) und der ebenen Unterlage (7) im unverspannten Zustand zwischen 3° und 20°, vorzugsweise zwischen 5° und 15° beträgt.

5. Scheibe nach Anspruch 1 oder 2,
**dadurch gekennzeichnet, daß**
der spitze Winkel (β) zwischen der Innenringfläche (5) und der senkrecht zur Achse der Scheibe befindlichen ebenen Unterlage (7) im unverspannten Zustand etwa doppelt so groß ist, wie der spitze Winkel (α) zwischen der Außenringfläche (4) und der ebenen Unterlage (7).

6. Scheibe nach Anspruch 1 oder 2,
**dadurch gekennzeichnet, daß**
der spitze Winkel (β) zwischen der Innenringfläche (5) und der senkrecht zur Achse der Scheibe befindlichen ebenen Unterlage (7) im unverspannten Zustand zwischen 10° und 20°, vorzugsweise zwischen 12° und 15°, beträgt.

7. Scheibe nach Anspruch 1 bis 5,
**dadurch gekennzeichnet, daß**
die Rinne (3) in der Scheibenunterseite kreisabschnitt- beziehungsweise halbkreisförmig ausgebildet ist.

8. Scheibe nach Anspruch 1,
**dadurch gekennzeichnet, daß**
sich das Verhältnis von Außenringfläche (4) zu Innenringfläche (5) wie 3 : 1 verhält.

9. Scheibe nach Anspruch 1,
**dadurch gekennzeichnet, daß**
neben der Scheibenunterseite (2) auch die Scheibenoberseite (1) eine Rinne aufweist.

10. Scheibe nach Anspruch 9,
**dadurch gekennzeichnet, daß**
die Rinne in der Scheibenoberseite kreisabschnittbeziehungsweise halbkreisförmig ausgebildet ist.

11. Scheibe nach Anspruch 1,
**dadurch gekennzeichnet, daß**
die Außenkante (6) der Außenringfläche (4) scharfkantig ist.

12. Scheibe nach Anspruch 1,
**dadurch gekennzeichnet, daß**
die Scheibenoberseite (1) im Innenringbereich eine Profilierung aufweist.

13. Scheibe nach Anspruch 12,
**dadurch gekennzeichnet, daß**
die Profilierung als Rändelprofilierung, Kreuzrändelprofilierung, oder Riffelung ausgebildet ist.

14. Scheibe nach Anspruch 1,
**dadurch gekennzeichnet, daß**
die Scheibenoberseite (1) eine Wölbung aufweist.

15. Scheibe nach Anspruch 14,
**dadurch gekennzeichnet, daß**
die Wölbung konkav ausgebildet ist.

16. Scheibe nach Anspruch 1,
**dadurch gekennzeichnet, daß**
der gesamte Scheibenkörper im Außenringbereich bombiert ist.

17. Scheibe nach Anspruch 3,
**dadurch gekennzeichnet, daß**
der gesamte Scheibenkörper im Innenringbereich bombiert ist.

## Claims

1. Springy disc for securing screws, nuts and the like, with an essentially ring-shaped disc body of certain strength having a disc top side and a disc bottom side, wherein the disc bottom side is divided into an outer ring surface and an inner ring surface, in which the outer ring surface (4) with an even substrate (7) situated perpendicular to the axis of the disc forms a smaller pointed angle (α) than the inner ring surface (5), and in the relaxed state the disc with the outer edge of the outer ring surface rests on the even substrate, and the outer ring surface and the inner ring surface form a pointed angle with this even substrate,
characterised
in that the disc bottom side (2) is divided by a continuous groove (3) into the outer ring surface (4) and the inner ring surface (5), and the outer ring surface (4) is arched towards the inside.

2. Disc according to claim 1,
characterised
in that the inner ring surface (5) is constructed evenly.

3. Disc according to claim 1,
characterised
in that the inner ring surface (5) is constructed to arch inwardly.

4. Disc according to claim 1 or 2,
characterised
in that the pointed angle (α) between the outer ring surface (4) and the even substrate (7) in the relaxed state is between 3° and 20°, preferably between 5° and 15°.

5. Disc according to claim 1 or 2,
characterised
in that the pointed angle (β) between the inner ring surface (5) and the even substrate (7) situated perpendicular to the axis of the disc in the relaxed state is approximately twice as big as the pointed angle (α) between the outer ring surface (4) and the even substrate (7).

6. Disc according to claim 1 or 2,
characterised in that the pointed angle (β) between the inner ring surface (5) and the even substrate (7) situated perpendicular to the axis of the disc in the relaxed state is between 10° and 20°, preferably between 12° and 15°.

7. Disc according to claim 1 to 5,
characterised
in that the groove (3) is constructed in the disc bottom side in the form of a circular section or semi-circle.

8. Disc according to claim 1,
characterised
in that the relationship of outer ring surface (4) to inner ring surface (5) behaves as 3 : 1.

9. Disc according to claim 1,
characterised
in that, apart from the disc bottom side (2), the disc top side (1) also has a groove.

10. Disc according to claim 9,
characterised
in that the groove in the disc top side is constructed in the form of a circular section or semi-circle.

11. Disc according to claim 1,
characterised
in that the outer edge (6) of the outer ring surface (4) is angular.

12. Disc according to claim 1,
characterised
in that on the disc top side (1) the inner ring region has a profile.

13. Disc according to claim 12,
characterised
in that the profiling is in the form of edge profiling, cross-edge profiling or knurling.

14. Disc according to claim 1,
characterised
in that the disc top side (1) is arched.

15. Disc according to claim 14,
characterised
in that the arching is concave.

16. Disc according to claim 1,
characterised
in that the entire disc body is cambered in the outer ring region.

17. Disc according to claim 3,
characterised
in that the entire disc body is cambered in the inner ring region.

## Revendications

1. Rondelle élastique destinée à réaliser l'arrêt de vis, d'écrous ou d'éléments similaires, comprenant un corps de rondelle de forme sensiblement annulaire et d'une épaisseur déterminée, qui présente une face supérieure de rondelle et une face inférieure de rondelle, la face inférieure de rondelle étant divisée en une surface annulaire extérieure et une surface annulaire intérieure, la surface annulaire extérieure (4) formant, avec une base d'appui plane s'étendant perpendiculairement à l'axe de la rondelle, un angle aigu (α) plus faible, que la surface annulaire intérieure (5), et la rondelle reposant, à l'état détendu, avec le bord extérieur de la surface annulaire extérieure, sur la base d'appui plane, et la surface annulaire extérieure ainsi que la surface annulaire intérieure formant un angle aigu avec cette base d'appui plane, **caractérisée** en ce que la face inférieure (2) de la rondelle est divisée par une gorge périphérique (3) en la surface annulaire extérieure (4) et la surface annulaire intérieure (5), et la surface annulaire extérieure (4) est cintrée vers l'intérieur.

2. Rondelle selon la revendication 1, **caractérisée** en ce que la surface annulaire intérieure (5) est d'une configuration plane.

3. Rondelle selon la revendication 1, **caractérisée** en ce que la surface annulaire intérieure (5) est cintrée vers l'intérieur.

4. Rondelle selon la revendication 1 ou 2, **caractérisée** en ce que l'angle aigu (α) entre la surface annulaire extérieure (4) et la base d'appui plane (7) présente, à l'état détendu, une valeur comprise entre 3° et 20°, de préférence entre 5° et 15°.

5. Rondelle selon la revendication 1 ou 2, **caractérisée** en ce que l'angle aigu (β) entre la surface annulaire intérieure (5) et la base d'appui plane (7) disposée perpendiculairement à l'axe de la rondelle, présente, à l'état détendu, une valeur environ égale au double de celle de l'angle aigu (α) entre la surface annulaire extérieure (4) et la base d'appui plane (7).

6. Rondelle selon la revendication 1 ou 2, **caractérisée** en ce que l'angle aigu (β) entre la surface annulaire intérieure (5) et la base d'appui plane (7) disposée perpendiculairement à l'axe de la rondelle, présente, à l'état détendu, une valeur comprise entre 10° et 20°, de préférence entre 12° et 15°.

7. Rondelle selon les revendications 1 à 5, **caractérisée** en ce que la gorge (3) dans la face inférieure de la rondelle, présente une forme de secteur circulaire, voire une forme semi-circulaire.

8. Rondelle selon la revendication 1, **caractérisée** en ce que le rapport de la surface annulaire extérieure (4) à la surface annulaire intérieure (5) correspond à 3 : 1.

9. Rondelle selon la revendication 1, **caractérisée** en ce qu'en-dehors de la face inférieure (2) de la rondelle, la face supérieure (1) de la rondelle présente également une gorge.

10. Rondelle selon la revendication 9, **caractérisée** en ce que la gorge dans la face supérieure de la rondelle présente une forme de secteur circulaire, voire une forme semi-circulaire.

11. Rondelle selon la revendication 1, **caractérisée** en ce que le bord extérieur (6) de la surface annulaire extérieure (4) est à arête vive.

12. Rondelle selon la revendication 1, **caractérisée** en ce que la face supérieure (1) de la rondelle présente, dans la zone annulaire intérieure, une partie profilée.

13. Rondelle selon la revendication 12, **caractérisée** en ce que la partie profilée se présente sous la forme d'une partie moletée, d'une partie à moletage croisé ou d'une partie striée.

14. Rondelle selon la revendication 1, **caractérisée** en ce que la face supérieure (1) de la rondelle présente un cintrage.

15. Rondelle selon la revendication 14, **caractérisée** en ce que le cintrage est concave.

16. Rondelle selon la revendication 1, **caractérisée** en ce que l'ensemble du corps de la rondelle est bombé dans la zone annulaire extérieure.

17. Rondelle selon la revendication 3, **caractérisée** en ce que l'ensemble du corps de la rondelle est bombé dans la zone annulaire intérieure.
